# EUROPEAN PATENT SPECIFICATION

(11) **EP 2 938 561 B1**
(45) Date of publication and mention of the grant of the patent: **26.08.2020**
(21) Application number: 13869647.1
(22) Date of filing: 08.12.2013
(51) Int. Cl.: B65D 85/34, B65D 30/02, B65B 25/04, B65D 81/26, A23B 7/148, B65D 81/24

(54) **BREATHABLE CONTAINER FOR FRUITS AND VEGETABLES**
ATMUNGSAKTIVER BEHÄLTER FÜR OBST UND GEMÜSE
CONTENANT RESPIRANT POUR FRUITS ET LÉGUMES

(30) Priority: 28.12.2012 US 201213729243
(43) Date of publication of application: 04.11.2015
(73) Proprietor: Shubham, Chandra, Milford, MA 01757 (US); WILLIAMS, Benjamin, Scott, Walpole MA 02032 (US)
(72) Inventor: Shubham, Chandra, Milford, MA 01757 (US); WILLIAMS, Benjamin, Scott, Walpole MA 02032 (US)
(74) Representative: AWA Denmark A/S
(86) International application number: PCT/US2013/073770
(87) International publication number: WO 2014/105397

(56) References cited:
- DE-U1- 20 021 191
- US-A- 4 910 032
- US-A1- 2007 059 406
- US-A1- 2008 116 098
- US-A1- 2009 239 432
- US-A1- 2011 083 366
- US-A1- 2012 031 797
- US-A1- 2012 031 797
- US-B2- 7 175 021
- US-B2- 7 772 139

## Description

### FIELD OF THE INVENTION

The invention relates to a container with a gas Permeable Non- Woven Fabric based Film with high permeability towards oxygen and carbon dioxide, and is directed more particularly to such a system as is suitable for extending the shelf life of fresh fruits and vegetables (both whole and fresh cut)..

### BACKGROUND

Produce is a living tissue that derives energy primarily by exchanging gases with its surroundings through the process of respiration. Respiration involves the
consumption of atmospheric oxygen, carbohydrates, and organic acids by the plant tissue, and the consequent production and release of metabolic energy, heat, carbon dioxide and water vapor.

The packaging systems provided in the art range from basic low density polyethylene bags to fairly sophisticated high oxygen transmission rate gas permeable membranes.

### SUMMARY

Some shortcomings of such packaging systems include the inability to establish ideal oxygen and carbon dioxide atmosphere levels inside the packaging
simultaneously. Typically, since the permeation rate for such packages for oxygen and carbon dioxide is same, if the oxygen atmosphere inside the package is 5 % the carbon dioxide atmosphere will be 21-5 = 16%. So in essence the sum of oxygen and carbon dioxide levels will be 21 %. Therefore, atmospheres such as 2 % Oxygen and 5 % Carbon Dioxide cannot be achieved.

US 2009/239432 and US 2012/031797 disclose gas permeable non-woven fabric based films with high permeabilities towards oxygen and carbon dioxide, and packaging systems for extending the shelf life of fresh fruits and vegetables, and vase life of flowers.
US 2011/083366 discloses a gas permeable non-woven fabric based packaging for cut flowers, with high permeability towards oxygen and carbon dioxide, and a packaging system for extending the shelf life and vase life of cut flowers.
US 4,910,032 discloses a container for retarding the maturation of respiring fresh produce such as fruits, vegetables, or flowers. The container is constructed of a substantially gas-impermeable material completely enclosing the produce, and the gas impermeable material has both a gas-permeable panel that is substantially impermeable to moisture in one or more of its walls to provide a controlled flow or flux of CO₂ and O₂ through its walls and a cellophane panel that is permeable to moisture while being substantially impermeable to the flow of O₂ and CO₂ in one or more of its walls. This is intended to provide a controlled flow of moisture through the walls. The gas-permeable panel is a microporous plastic membrane of a uniaxially or biaxially oriented film of a polymer.

Further, many of the packaging systems in use control and/or inhibit the growth of ethylene levels inside the package containing produce. Ethylene is a ripening agent, which is produced naturally in fresh fruits and vegetables as they respire. However, controlling the ethylene levels does not guarantee shelf life or, in the case of flowers, vase life extension, because the oxygen levels and carbon dioxide levels need to be controlled simultaneously. Reduced oxygen levels caused increased metabolic activity and hence reduction in shelf life, and increased carbon dioxide levels leads to tissue softening, and fungal and bacterial growth.

Still further, use of polyethylene bags do not have the adequate permeability needed for long term storage of produce and/or flowers. Issues such as development of anaerobic conditions when the oxygen levels go below 1 % and development of high carbon dioxide levels permanently injure the produce; make the use of low density plastic bags incapable in shelf life extensions.

Accordingly, there remains room for improvement in many areas of shelf life and vase life extension technologies.

An objective of the invention is, therefore, to provide a packaging system with a high permeable polymer coated non-woven fabric , which in essence by naturally establishing modified atmospheres inside a package containing fresh produce/flower can effectively extends its shelf/vase life.

Produce is a living tissue that derives energy primarily by exchanging gases with its surroundings through the process of respiration. Respiration involves the
consumption of atmospheric oxygen, carbohydrates, and organic acids by the plant tissue, and the consequent production and release of metabolic energy, heat, carbon dioxide and water vapor. As the produce consumes oxygen and gives off carbon dioxide, an equilibrium gas concentration is established in the package. The gas permeable non-woven film (gas permeable film) is capable of providing different package permeabilities in order to maintain specific oxygen and carbon dioxide levels in a package and maintain this optimum atmosphere even as the temperature is changing. As the produce or other agricultural item consumes oxygen and give off carbon dioxide, the equilibrium gas concentration is established in the package. This process is a function of the permeability of the polymer and its selectivity ration of oxygen to carbon dioxide. Thus, the created atmosphere is adapted to extend shelf life, maintain high quality and preserve nutrients of fresh produce items by naturally regulating respiration of the agricultural items.

Thus the created atmosphere is able to extend shelf life, maintain high quality and preserve nutrients of fresh produce items by regulating the respiration of the targeted items. Gas Permeable Non- Woven Fabric based Film, which allows for Carbon Dioxide gas to move in and out of the packaging at a rate many times greater than that of Oxygen. By reducing the atmospheric levels of Oxygen and increasing the atmospheric levels of Carbon Dioxide within the packaging, the ripening of fresh produce and fresh cut flowers can be delayed, the produce's respiration and ethylene production rates can be reduced, the softening of the produce can be retarded, and various compositional changes associated with produce ripening can be slowed down.

A particular configuration of the highly permeable non woven fabric based film is obtained by coating nonwoven fabric such as one with 50 % polyester and 50 % rayon, with a thin layer of polymer, the fabric based system gets its structural strength from the fabric and the permeability from the polymer. This approach enables to reduction in the thickness of the polymer coating on the fabric, and yet maintains enough strength with the fabric, and therefore enhancing its Oxygen Permeation Rate to 110,000 cc/100in2/day/atm, or even up to 611,111 cc/100in2/day/atm, with carbon dioxide permeability of at least 350,000 cc/100in2/day/atm, with a maximum permeability of 3, 888, 889 cc/100in2/day/atm at 13 °C.

With the above and other objects in view, as will hereinafter appear, a feature of the present invention is the provision of a packaging system including a container with a hole cutout thereof adapted to receive a permeable film, including an adhesive patch for binding the film to the cutout part of the container.

### BRIEF DESCRIPTION OF THE DRAWINGS

The foregoing and other objects, features and advantages of the invention will be apparent from the following description of particular embodiments of the invention, as illustrated in the accompanying drawings in which like reference characters refer to the same parts throughout the different views. The drawings are not necessarily to scale, emphasis instead being placed upon illustrating the principles of the invention.;
FIG. 1 is a simplified illustration of one form of shelf life extending container with the Gas Permeable Non- Woven Fabric based Film illustrative of an embodiment of the invention.
FIG. 2 shows key components of a breathable container.
FIG. 3 shows the exterior of a breathable container.
FIG. 4 shows a breathable container.
FIG. 5 shows a large storage box.
FIG. 6 shows a small storage box.
FIG. 7 shows a small storage box.
FIG. 8 shows a small storage box lid.
FIG. 9 shows a small storage box lid.
FIG. 10 shows a large storage box lid
FIG. 11 shows a breathable container.
FIG. 12 shows a breathable container.
FIG. 13 shows a twist-lock type cartridge mechanism.
FIG. 14 shows an exploded drawing of a breathable container.
FIG. 15 shows the lid of a breathable container.
FIG. 16 shows an exploded drawing of the lid of a breathable container.
FIG. 17 shows a lid assembly of a breathable container.

### DETAILED DESCRIPTION

The Shelf Life Extending Container consists of an outer casing (1), slide housing (2), slide (3), slide knob (4), overhand platform (5), storage containers (6), a hinge (7), an outer casing lid (8) with a handle (9).

The Shelf Life Extender' s purpose is to preserve the shelf life of fresh fruits and vegetables (FF&V). It does this by controlling the atmosphere within the storage containers via a Gas Permeable Non- Woven Fabric based film (30). This film is inserted into the slide housing, allowing it to cover a hole (31) cut into the overhang platform (5). The film (30) is then glued around its perimeter to seal it into place, as well as provide a better air-tight seal.

The fruits and vegetables are placed within the storage containers (6), which are located within the outer casing (1). Adhesive backed neoprene rubber strips (10) are positioned on the inside lip of the overhang platform (5), as well as the back inside wall of the outer casing. This gasketing allows for an air tight fit of the storage containers (6), which in turn allows the Gas Permeable Non- Woven Fabric based film (30) to control the atmosphere underneath the overhang platform (5) as well as within the storage containers (6). The atmosphere within the storage containers (6) and the atmosphere underneath the overhang platform (5) are homogenous due to the entrances to the storage boxes (13,16,17,19). These entrances allow the air within the storage boxes (6) to freely flow out of the storage boxes (6) and up through the Gas Permeable Non- Woven Fabric based film (30) which is covering the hole cut into the overhang platform (5).

The atmosphere in the storage containers (6) is further controlled by moving the slide (3) within the slide housing (2) via the slide knob (4) over the hole cut into the overhang platform (5). The user slides the slide (3) to the desired numbered notch which is located on the side of the slide housing (2). Each numbered notch correlates to how effective you are allowing the Gas Permeable Non- Woven Fabric based film (30) to modify the atmosphere within the storage containers (6). The notched number the user would slide the leading edge of the slide (2) to depends on the quantity and type of FF&V stored within the storage containers. Adjustment of the slide (2) is necessary for any change in quantity or type of FF&V stored within the storage containers (6).

When a storage container lid is removed, its atmosphere is sealed off from the other storage containers and the atmosphere underneath the overhang platform. This is accomplished by allowing the gates (12,14,20) which are located in voids (11,15,18) between the walls of the storage containers (6) to fall when the lids are removed, sealing the entrances to the storage boxes (13,16,17,19). The gates (12,14,20) of the storage boxes (6) are conversely drawn up when the lids are on, exposing the entrances (13,16,17,19) to the storage boxes (6), which allows the atmosphere within the storage containers to once again be controlled by the Gas Permeable Non- Woven Fabric based film (30). The storage containers' gates (12,14,20) are drawn up when the lids are on via the adhesive backed magnetic strips (21,24,27) which are located on the storage containers' lids. These lids are able to draw the storage containers' gates up due to the fact that the gates are constructed out of 410 stainnless steel, which is magnetic.

The storage container lids also provide an airtight seal when on their corresponding storage containers via adhesive backed neoprene rubber strip (22,25,28). Each storage container lid can be removed and re-installed via its corresponding lid handle (23,26,29).

The storage boxes (6) and slide (3) can be accessed within the outer casing (1) by pushing the outer casing lid (8) upwards via the outer casing lid handle (9). The
outer casing lid (8) is held in place and allowed to open via the hinge (7).

Depicted below and in accordance with the drawings are example of produce storage and more particularly to such a packaging system as is suitable for extending the shelf life of fresh fruits and vegetables (both whole and fresh cut), and vase life of flowers. The configurations below include formation of the gas permeable non-woven fabric film (30), or membrane, for providing particular permeability according to a predetermined transfer rate and packaging configurations employing the gas permeable non-woven fabric for storing and transporting produce products stored therein.

The gas permeable non-woven fabric based film (30) is employed in packaging for extending the shelf life of various fresh fruits and vegetables and vase life of fresh cut flowers by changing the atmosphere in which these living products are stored and respires. The high oxygen and carbon dioxide permeability of the film (30) establishes an ideal atmosphere for the specific perishable item, and therefore extends its shelf life. The establishment of lower oxygen and carbon dioxide atmospheres inside packages using the film (30) also leads to reduction in the respiration rate of the perishable items. The reduction in the respiration rate prevents loss of moisture, production of metabolic heat, and yellowing, browning, reduction in production levels of ethylene. Therefore, the created atmosphere is able to extend shelf life, maintain high quality and preserve nutrients of fresh produce items by naturally regulating respiration of said produce/flower.

Formation of the Gas Permeable Non- Woven Fabric based Film (30) fabrication process includes creation of these films (30). The components for the film (30) include polydimethyl siloxane (PDMS) base (This polydimethyl siloxane either consists of > 60.0 % Dimethyl siloxane, dimethylvinyl-terminated, 30.0 - 60.0 Dimethylvinylated and trimethylated silica, and 1.0 - 5.0 % Tetra(trimethylsiloxy) silane, or > 60.0 % Dimethyl siloxane, dimethylvinyl-terminated and 30.0 - 60.0 % Dimethylvinylated and trimethylated silica.), and curing agent mixed in the ratio 10: 1, non-woven fabric (50% polyester, 50 % Rayon). A mylar Rod (#3, which creates a film thickness of 0.27 MIL) was also used.
b. Mix the PDMS base and curing agent in a 10: 1 ratio measured by weight
c. De-gas the polymer in a desiccator for approximately 30 minutes. This removes any air bubbles resulting from the mixing process.
d. Pour this mixture on a non woven fabric, and roll the Mylar Rod #3 to form a uniform spread. Mylar rod #3 deposits a thickness of 0.27 MIL on the fabric.
e. Preheat oven for 20 minutes at 170 °F (76.6 °C).
f. Cure the PDMS-coated fabric at 170 °F (76.6 °C) for 20 minutes to promote cross-linking.

Process to design packages using the Gas Permeable Non- Woven Fabric based film (30). The respiration rates, ideal atmospheres, and ethylene sensitivities for various perishable items, including fresh fruits and vegetables and fresh cut flowers have been documented by University of California, Davis. The information available was utilized in designing these packages.
a. Identify the perishable item that is to have a shelf life extension. Items identified and tested have included, broccoli, cilantro, bananas, whole corn, lettuce, tomatoes, red seedless grapes, mushrooms, strawberries and cut flowers (roses, orchids, gerbera and tulips).
b. For example, in the case of bananas, the respiration rates, ideal atmospheres and ideal storage temperatures were identified. The Oxygen transmission Rates (OTR) and Carbon Dioxide transmission Rates (COTR) for the Gas Permeable Non- Woven Fabric based film have already been tested by an independent test agency, Mocon Inc., of Minneapolis, MN. The OTR and COTR values define the permeability for particular agricultural items, for example by measuring the weight of the produce, such as bananas. In a particular configuration, the OTR and COTR for these films at 13.3 °C (an ideal temperature for bananas) tested at 111,735 and 699,000 cc/100inA2/day/atm respectively. Using the weights, respiration rates, ideal atmospheres, COTR and OTR of these films, the surface area needed for these films can be calculated. Take the produce bag, can be low density polyethylene bag (LDPE), high density polyethylene bag (HDPE), or any other non-porous material based, used to store bananas, and cut a hole in the bag equivalent to the surface area needed for the film (30).
c. Using a good adhesive tape (such as electrical insulating tape), attach the Gas Permeable Non- Woven Fabric based film (30) at the position where the produce bag has a hole.
d. Place the produce, banana inside the bag.
e. Using a regular elastic band close the opening of the produce bag.

The produce bag with the Gas Permeable Non- Woven Fabric based Films will naturally attain the ideal atmospheres needed for bananas, and therefore will extend its shelf life. Testing results have successfully been able to extend the life of bananas to 20+ days.

As the produce or other agricultural items respire, they consume oxygen and give off carbon dioxide, and an the equilibrium gas concentration is established in the package. This process is a function of the gas permeable film permeability and carbon dioxide to oxygen selectivity ratio. Thus, the created atmosphere (typically 2-20% oxygen and 5-15% carbon dioxide) is able to extend shelf life, maintain high quality and preserve the nutrients by naturally regulating respiration of the produce and/or agricultural items. Lower oxygen levels substantially around 2% reduce the metabolic activity of the perishable item (produce) and elevated carbon dioxide levels prevent rotting and fungal growth. Lower levels of oxygen also reduce the ethylene production of the perishable items. Predominantly perishable items with high sensitivity towards ethylene benefit from avoidance of elevated ethylene levels. Ethylene promotes ripening of bananas, and therefore lower ethylene levels tend to extend the shelf life of bananas. By changing the surface area and the thickness of the gas permeable film (30), the permabilities to oxygen and carbon dioxide can be controlled, and therefore longer shelf life agricultural items such as fruits and vegetables is promoted.

The above and other features of the invention, including various novel details of construction and combinations of parts, will now be more particularly described with reference to the accompanying drawings and pointed out in the claims. It will be understood that the particular device embodying the invention is shown by way of illustration only and not as a limitation of the invention. The principles and features of this invention may be employed in various and numerous embodiments without departing from the scope of the invention.

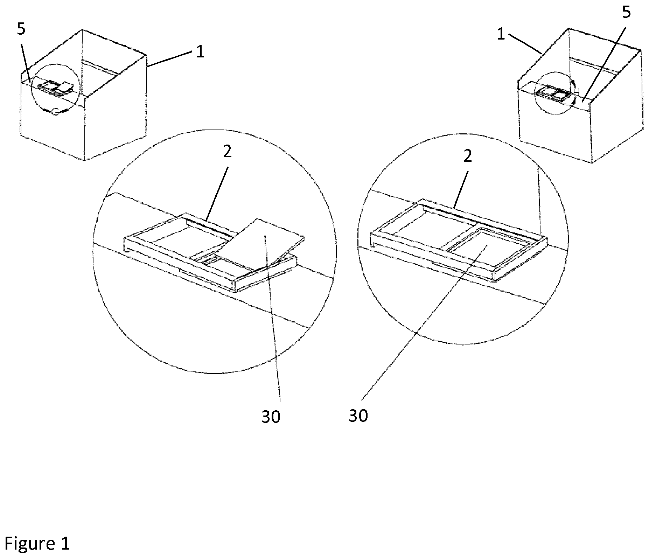

Referring to FIG. 1, it will be seen that an illustrative configuration includes a breathable container with a gas permeable non-woven fabric film 30 inserted into the slide housing 2 to cover the hole 31 cut into the overhang platform 5, where FIG. 1 is an enlarged view of matter in circles G and H, respectively of FIG. 1 ;

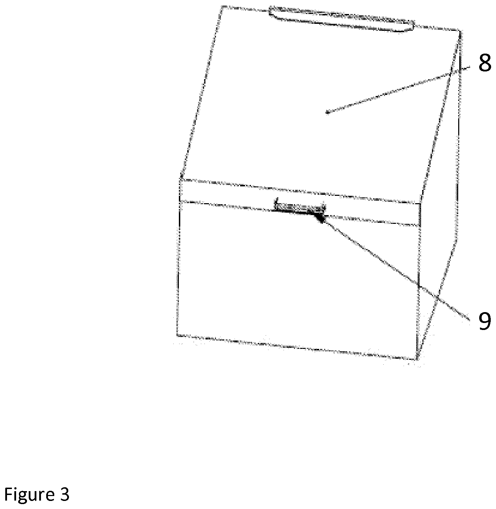

Referring to FIG. 3, it will be seen that an illustrative example showing the exterior of the breathable container with the outer casing lid 8 and the outer casing lid handle 9 with the gas permeable non-woven fabric film 30 including a non-woven fabric (50% polyester, 50 % Rayon) with a coating of polymer consisting of polydimethyl siloxane either consists of > 60.0 % Dimethyl siloxane, dimethylvinyl-terminated, 30.0 - 60.0 %Dimethylvinylated and trimethylated silica, and 1.0 - 5.0 % Tetra(trimethylsiloxy) silane, or > 60.0 % Dimethyl siloxane, dimethylvinyl-terminated and 30.0 - 60.0 % Dimethylvinylated and trimethylated silica., and curing agent mixed in the ratio 10:1.

Depicted below are examples of the gas permeable non-woven fabric employed for storage and transportation of produce and vegetative specimens in accordance with the teachings herein. Additional information concerning post harvest conditions for various produce items may be obtained from the website for the University of

California, Davis Department of Plant Sciences and other sources as known in the art.

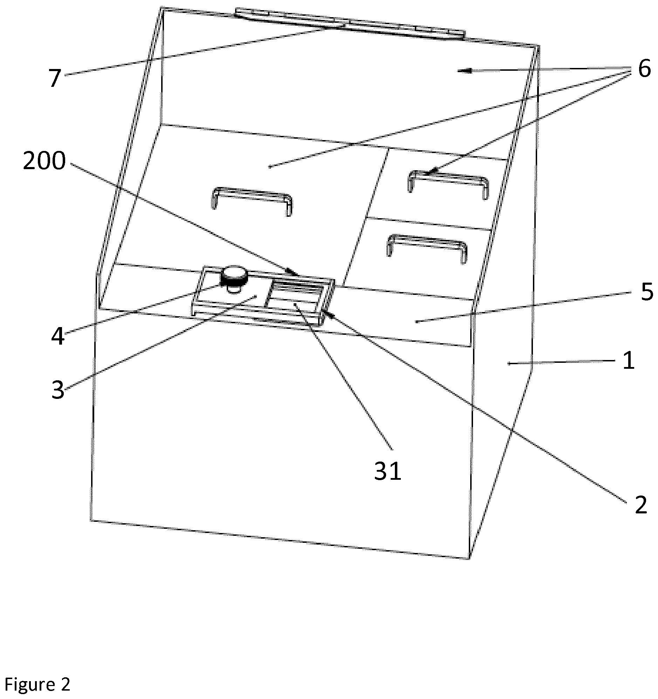

Figure 2 shows key components of the breathable container without the gas permeable non-woven fabric film 30, i.e. the hole 31 cut in the overhang platform 5. The slide housing 2 shows numbered notches 200 on the edge of the slide housing 2.

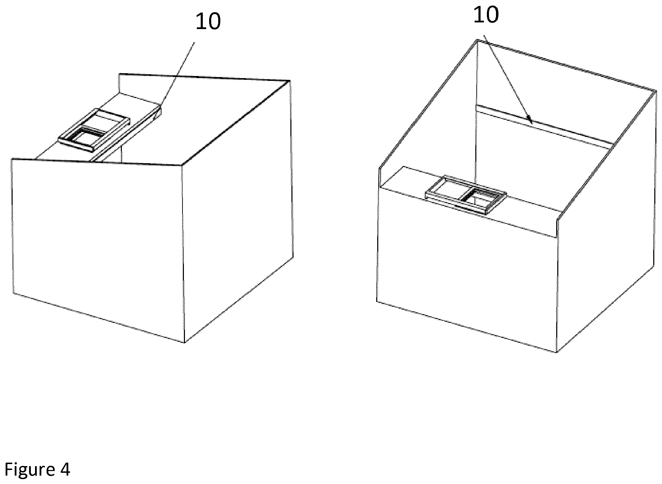

Figure 4 shows the location of the adhesive backed neoprene rubber strips 10 in the breathable container.

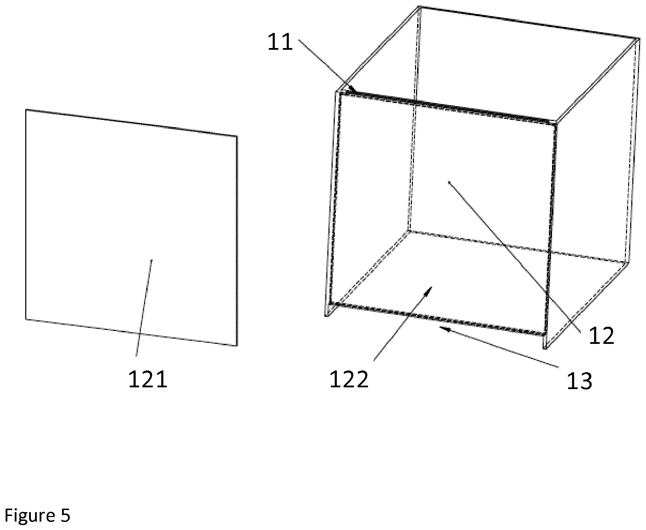

Figure 5 shows the void 11 between the walls, gate 12 between the entrance 13 to the storage box; gate 121 slides in the void 122 in the front wall, for a large storage box.

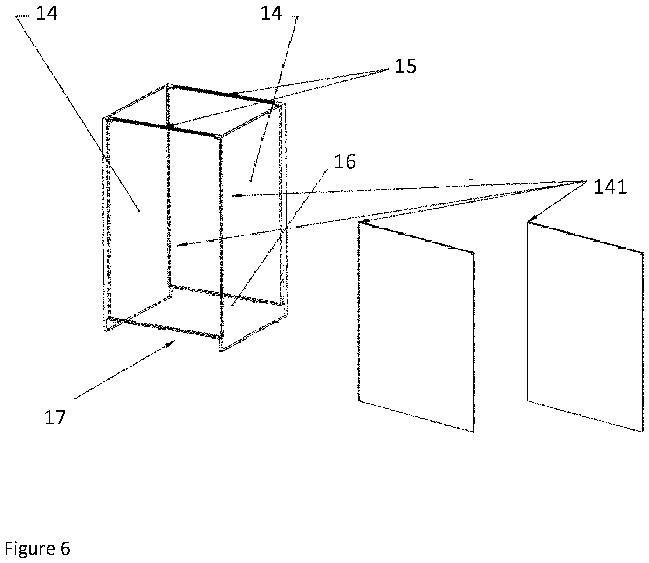

Figure 6 shows the gates 14 between the front and back walls and the voids 15 between the front and back walls, for a small storage box. Figure further 6 shows the exit 16 from front row storage box to back row storage box and the entrance 17 to front row storage box. Gates 141 slide in voids 15 between front and back walls.

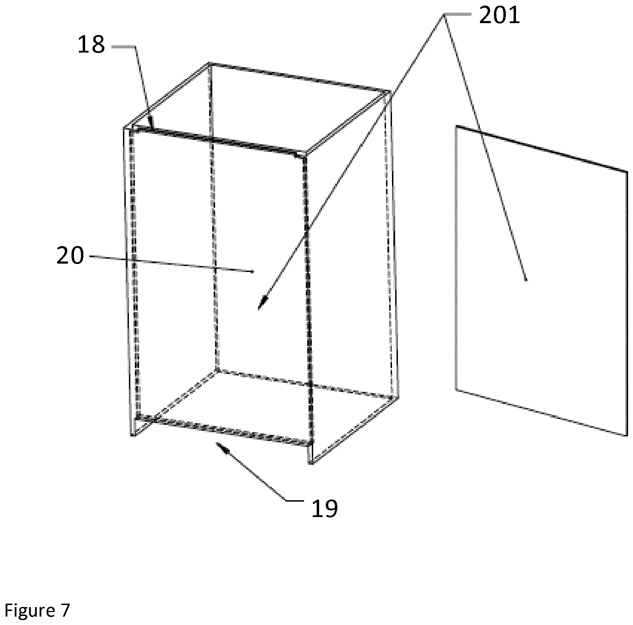

Figure 7 shows a rear small storage box and the void 18 between the front wall, the entrance 19 to back row storage box and the gate 20 between the front walls. Gates 201 slide in voids 18 between front and back walls.

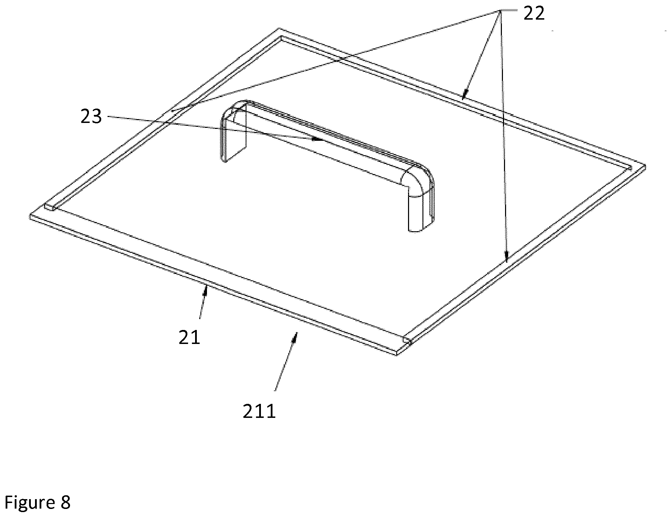

Figure 8 shows a back row small storage box lid with an adhesive backed magnetic strip 21, adhesive backed neoprene rubber strips 22. The side 211 faces the front of storage box.

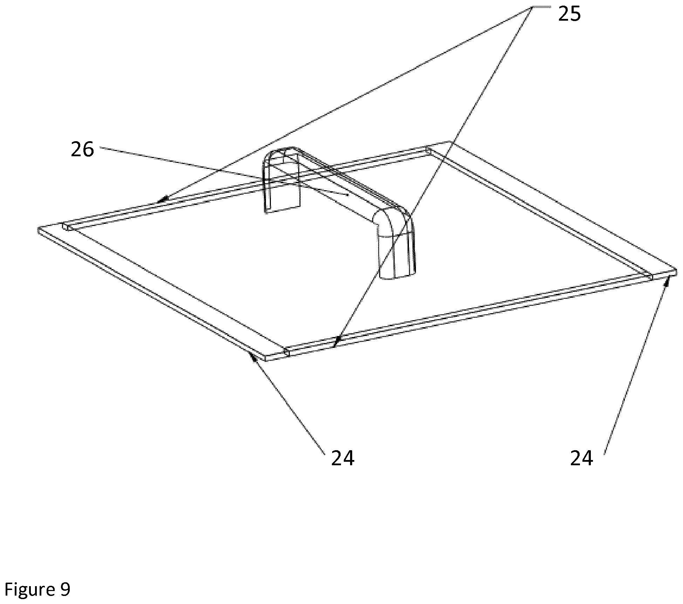

Figure 9 shows a front row small storage box lid with adhesive backed magnetic strips 24, adhesive backed neoprene rubber strips 25, and a lid handle 26.

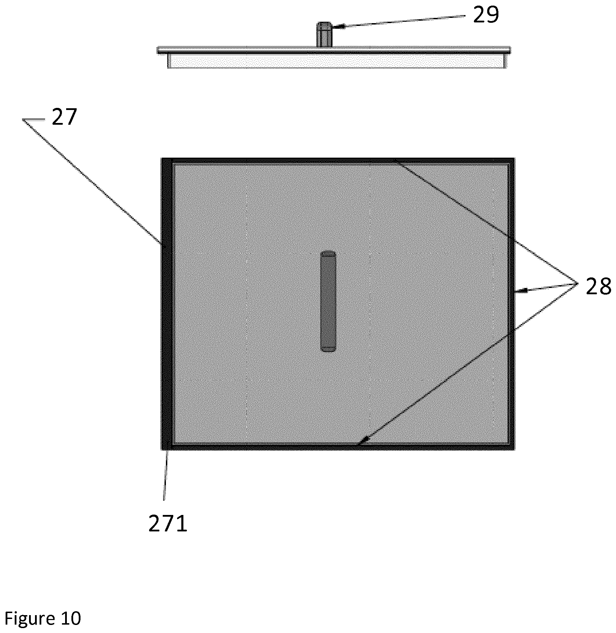

Figure 10 shows a large storage box lid with an adhesive backed magnetic strip 27, adhesive backed neoprene rubber strips 28, and with the end 271 facing the front of the box.

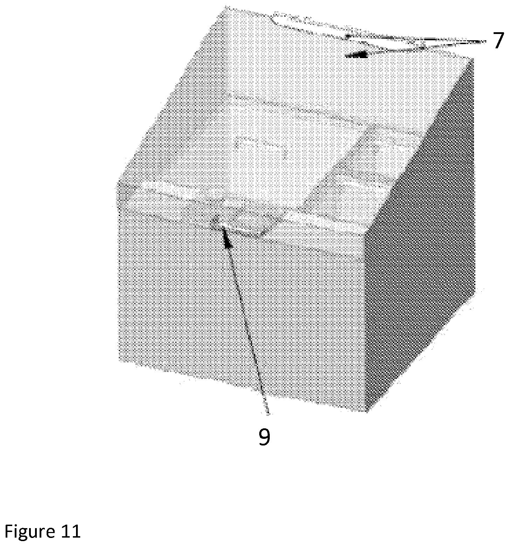

Figure 11 shows the location of the handle 9 and hinge 7 on the container. The hinge 7 is attached to the outer casing 1 and the outer casing lid 8 to allow the lid 8 to pivot vertically about the back outer wall casing. The handle 9 is attached to the outer lid 8.

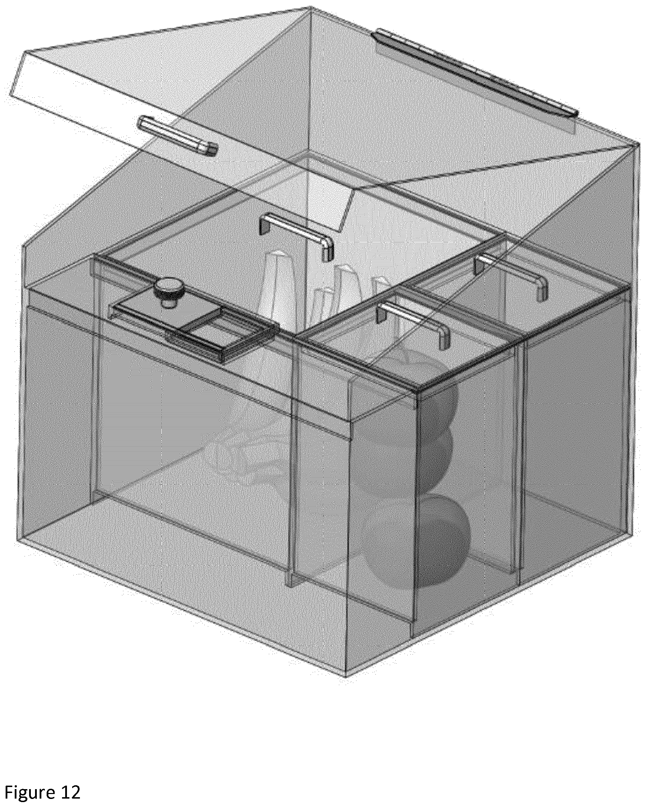

Figure 12 shows a breathable container with produce.

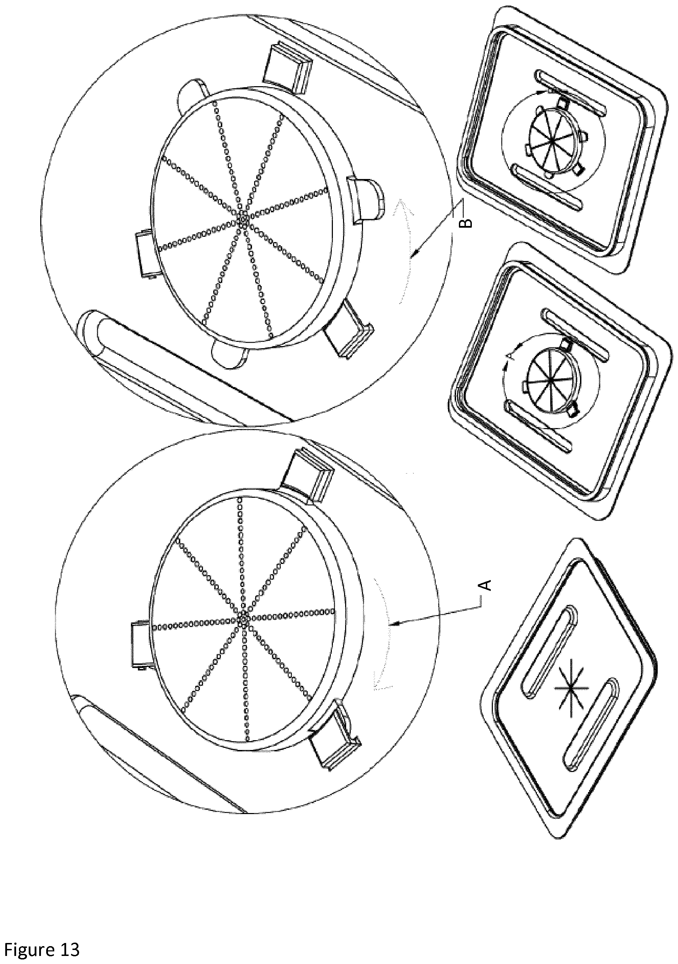

Figure 13 shows a twist-lock type cartridge mechanism indicating the directions to lock (A) and unlock (B) the cartridge.

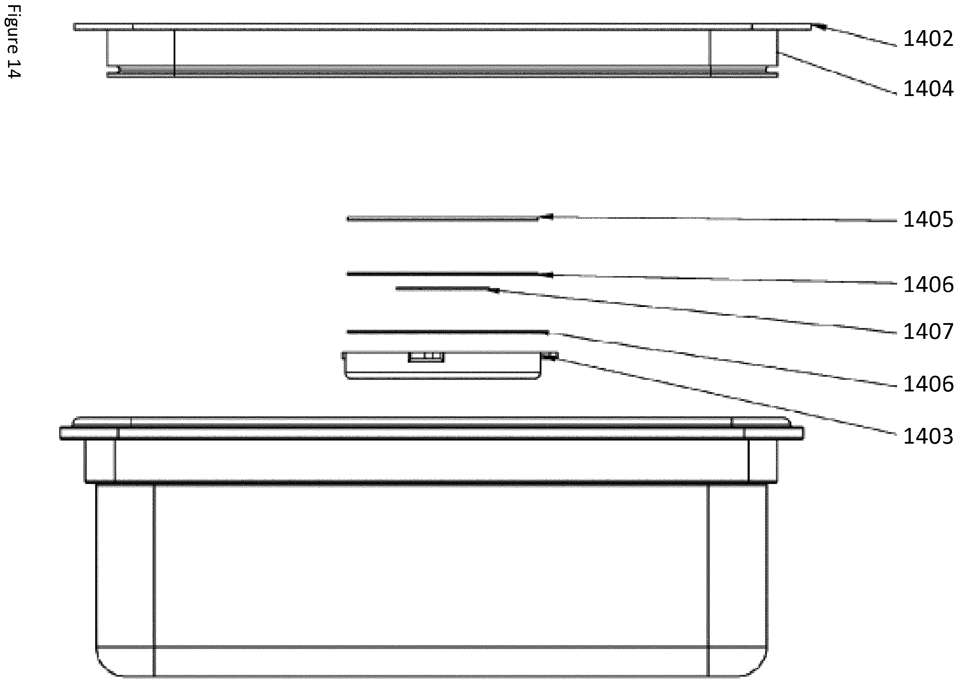

Figure 14 shows a container lid 1402, a twist-lock canister 1403, a container lid gasket 1404, a cartridge gasket 1405, cartridge plates 1406 and a gas permeable non-woven fabric film 1407.

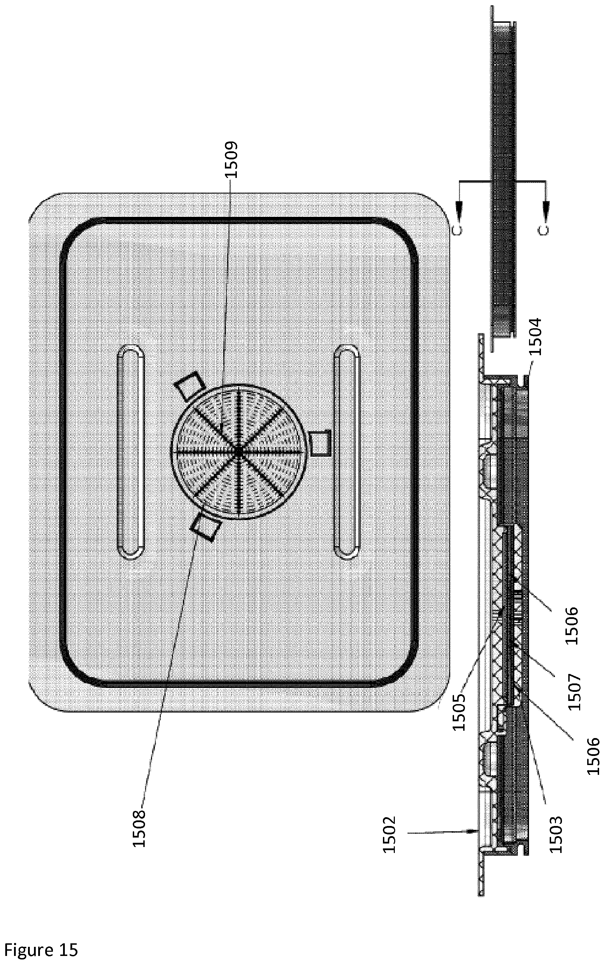

Figure 15 shows a twist-lock type cartridge with a container lid 1502, a twist-lock canister 1503, a container lid gasket 1504, a cartridge gasket 1505, cartridge plates 1506 and a gas permeable non-woven fabric film 1507. The cartridge has a raised ridge 1508 which gasket 1505 matches up to and vent holes 1509 in the lid. The section C-C is indicated.

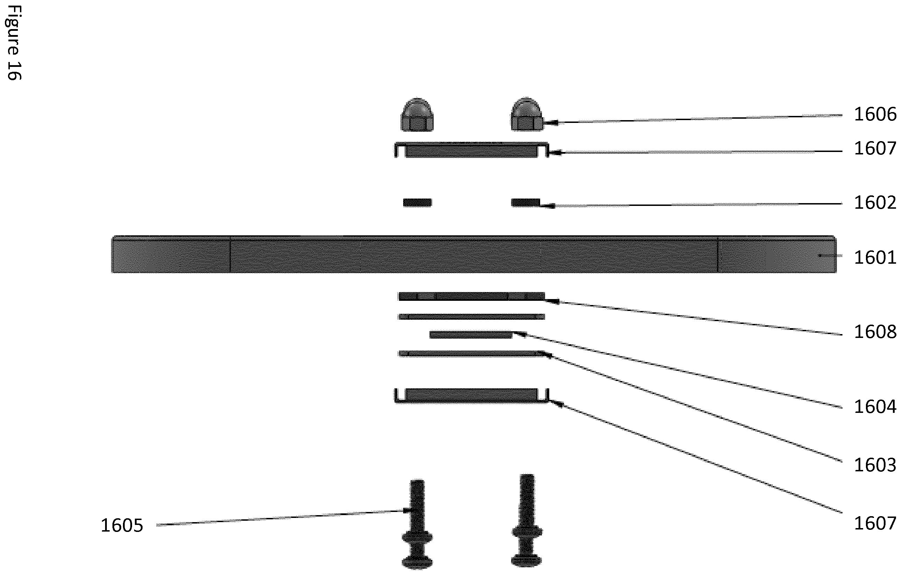

Figure 16 shows a lid assembly with a container lid 1601, a rubber washer 1602, a cartridge plate 1603, a gas permeable non-woven fabric film 1604, machine screws 1605 with gaskets, acorn nuts 1606, a guard plate 1607, and an adhesive backed gasket 1608, which attaches to cartridge plate 1603.

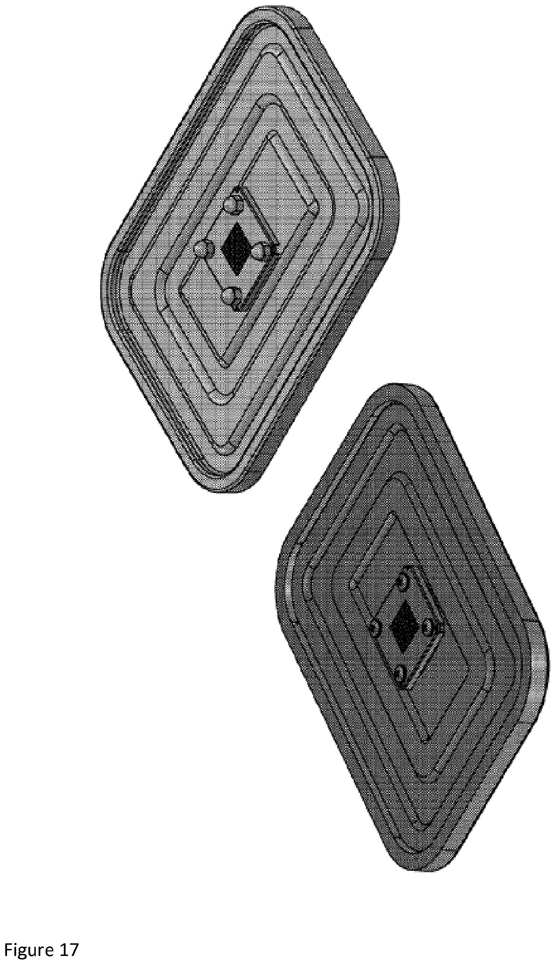

A lid assembly is shown in Figure 17.

## Claims

1. A breathable container comprising an outer casing (1), a slide housing (2) with a slide (3) having a slide knob (4), an overhang platform (5), one or more storage containers (6), an outer casing lid (8) held in place and allowed to open via a hinge (7), the outer casing lid (8) having a handle (9), where the overhang platform (5) has a hole (31) covered with a gas permeable non-woven fabric based film (30) comprising a substrate adapted for transmission of gases; and a coating on the fabric substrate having an oxygen permeability of at least 2,709 cm³/cm²/day/atm (42,000 cc/100in²/day/atm) with a maximum oxygen permeability of 61,935 cm³/cm²/day/atm (960,000 cc/100in²/day/atm) and having a carbon dioxide permeability of at least 22,581 cm³/cm²/day/atm (350,000 cc/100in²/day/atm), with a maximum carbon dioxide permeability of 250,896 cm³/cm²/day/atm (3,888,889 cc/100in²/day/atm) as determined at a temperature of 13.3°C; the breathable container defining a created atmosphere there within for extending the shelf life of multiple agricultural items, **characterised in that** the gas permeable non-woven fabric based film (30) is sealed in the slide housing (2), covering the hole (31).

2. The breathable container according to claim 1, further comprising of multiple small compartments configured to receive multiple agricultural items.

3. The breathable container according to claim 1 or 2, which breathable container is integrated into refrigeration systems intended to store and/or dispense multiple agricultural items.

4. The breathable container according to any one of claims 1 to 3, which breathable container is integrated into permanently affixed drawers and/or cabinets.

5. The breathable container according to any one of claims 1 to 4, wherein the slide (3) is movable within the slide housing (2) and wherein the gas permeable non-woven film (30) is inserted into the slide housing (2).

6. The breathable container according to claim 5, wherein the slide housing (2) has numbered notches located on the side of the slide housing (2).

7. The breathable container according to claim 6, which breathable container is integrated into refrigerated commercial produce display cases where multiple breathable containers can be integrated into a single display case unit.

8. The breathable container according to claim 6 or 7, which breathable container is integrated into commercial produce display cases where multiple breathable compartments can be integrated into a single display case unit.

9. The breathable container according to any one of claims 1 to 4, wherein the overhang platform (5) includes a non-sliding type cartridge mechanism which internally houses the gas permeable non-woven film.

10. The breathable container according to claim 9, wherein the overhang platform (5) includes a twist-lock type cartridge mechanism, which internally houses the gas permeable non-woven film.

11. The use of the breathable container according to any one of claims 1 to 10 to extend the shelf life of broccoli, cilantro, bananas, whole corn, lettuce, tomatoes, red seedless grapes, mushrooms, strawberries and cut flowers, such as roses, orchids, gerbera and tulips.

12. The use of the breathable container according to any one of claims 1 to 10 to store a banana for a minimum of 5 days and to a maximum of 16 days.

13. The use of the breathable container according to any one of claims 1 to 10 to store a strawberry for a minimum of 7 days and to a maximum of 14 days.

14. The use of the breathable container according to any one of claims 1 to 10 to store herbs for a minimum of 10 days and to a maximum of 32 days.

15. The use of the breathable container according to any one of claims 1 to 10 to store a tomato for a minimum of 7 days and to a maximum of 18 days.

16. The use of the breathable container according to any one of claims 1 to 10 to store lettuce for a minimum of 7 days and to a maximum of 32 days.

17. The use of the breathable container according to any one of claims 1 to 10 to store fresh cut vegetables or fresh cut fruits for a minimum of 7 days and to a maximum of 12 days.

18. The use of the breathable container according to any one of claims 1 to 10 to store fresh salad for a minimum of 5 days and to a maximum of 10 days.

## Patentansprüche

1. Atmungsaktiver Behälter umfassend ein Außengehäuse (1), ein Schiebergehäuse (2) mit einem Schieber (3) mit einem Schieberknauf (4), eine Überhangplattform (5), einen oder mehrere Lagerungsbehälter (6), einen Außengehäusedeckel (8), der in Position gehalten wird und dem es gestattet ist, sich über ein Scharnier (7) zu öffnen, wobei der Außengehäusedeckel (8) einen Griff (9) aufweist, wobei die Überhangplattform (5) ein Loch (31) aufweist, das von einem gasdurchlässigen vliesstoffbasierten Folie (30) bedeckt ist, umfassend ein Substrat, das für die Übertragung von Gasen geeignet ist; und eine Beschichtung auf dem Stoffsubstrat mit einer Sauerstoffdurchlässigkeit von wenigstens 2.709 cm³/cm²/Tag/atm (42.000 cc/100in²/Tag/atm) mit einer maximalen Sauerstoffdurchlässigkeit von 61.935 cm³/cm²/Tag/atm (960.000 cc/100in²/Tag/atm) und mit einer Kohlendioxiddurchlässigkeit von wenigstens 22.581 cm³/cm²/Tag/atm (350.000 cc/100in²/Tag/atm), mit einer maximalen Kohlendioxiddurchlässigkeit von 250.896 cm³/cm²/Tag/atm (3.888.889 cc/100in²/Tag/atm), bestimmt bei einer Temperatur von 13,3°C; wobei der atmungsaktive Behälter darin eine erzeugte Atmosphäre zur Verlängerung der Haltbarkeit mehrerer landwirtschaftlicher Artikel definiert, **dadurch gekennzeichnet, dass** der gasdurchlässige vliesstoff-basierte Folie (30) abdichtend in das Schiebergehäuse (2) eingesetzt ist, wobei er das Loch (31) bedeckt.

2. Atmungsaktiver Behälter nach Anspruch 1, ferner umfassend mehrere kleine Fächer, die dazu ausgebildet sind, mehrere landwirtschaftliche Artikel aufzunehmen.

3. Atmungsaktiver Behälter nach Anspruch 1 oder 2, wobei der atmungsaktive Behälter in Kühlsysteme integriert ist, die dazu bestimmt sind, mehrere landwirtschaftliche Artikel zu lagern und/oder auszugeben.

4. Atmungsaktiver Behälter nach einem der Ansprüche 1 bis 3, wobei der atmungsaktive Behälter in dauerhaft angebrachte Schubladen und/oder Schränke integriert ist.

5. Atmungsaktiver Behälter nach einem der Ansprüche 1 bis 4, wobei der Schieber (3) innerhalb des Schiebergehäuses (2) bewegbar ist und wobei der gasdurchlässige Vliesfolie (30) in das Schiebergehäuse (2) eingefügt ist.

6. Atmungsaktiver Behälter nach Anspruch 5, wobei das Schiebergehäuse (2) nummerierte Einkerbungen aufweist, die sich auf der Seite des Schiebergehäuses (2) befinden.

7. Atmungsaktiver Behälter nach Anspruch 6, wobei der atmungsaktive Behälter in gekühlte Auslagen für kommerzielle Produkte integriert ist, wobei mehrere atmungsaktive Behälter in eine einzelne Auslageeinheit integriert sein können.

8. Atmungsaktiver Behälter nach Anspruch 6 oder 7, wobei der atmungsaktive Behälter in gekühlte Auslagen für kommerzielle Produkte integriert ist, wobei mehrere atmungsaktive Fächer in eine einzelne Auslageeinheit integriert sein können.

9. Atmungsaktiver Behälter nach einem der Ansprüche 1 bis 4, wobei die Überhangplattform (5) einen nichtgleitenden Einsatzmechanismus enthält, der den gasdurchlässigen Vliesfolie im Inneren aufnimmt.

10. Atmungsaktiver Behälter nach Anspruch 9, wobei die Überhangplattform (5) einen Drehverriegelungs-Einsatzmechanismus enthält, der den gasdurchlässigen Vliesfolie im Inneren aufnimmt.

11. Nutzung des atmungsaktiven Behälters nach einem der Ansprüche 1 bis 10 zur Verlängerung der Haltbarkeit von Brokkoli, Koriander, Bananen, Vollmais, Salat, Tomaten, roten kernlosen Trauben, Pilzen, Erdbeeren und Schnittblumen, wie beispielsweise Rosen, Orchideen, Gerbera und Tulpen.

12. Nutzung des atmungsaktiven Behälters nach einem der Ansprüche 1 bis 10 zur Lagerung einer Banane für mindestens 5 Tage und höchstens 16 Tage.

13. Nutzung des atmungsaktiven Behälters nach einem der Ansprüche 1 bis 10 zur Lagerung einer Erdbeere für mindestens 7 Tage und höchstens 14 Tage.

14. Nutzung des atmungsaktiven Behälters nach einem der Ansprüche 1 bis 10 zur Lagerung von Kräutern für mindestens 10 Tage und höchstens 32 Tage.

15. Nutzung des atmungsaktiven Behälters nach einem der Ansprüche 1 bis 10 zur Lagerung einer Tomate für mindestens 7 Tage und höchstens 18 Tage.

16. Nutzung des atmungsaktiven Behälters nach einem der Ansprüche 1 bis 10 zur Lagerung von Salat für mindestens 7 Tage und höchstens 32 Tage.

17. Nutzung des atmungsaktiven Behälters nach einem der Ansprüche 1 bis 10 zur Lagerung frisch geschnittenen Gemüses oder frisch geschnittener Früchte für mindestens 7 Tage und höchstens 12 Tage.

18. Nutzung des atmungsaktiven Behälters nach einem der Ansprüche 1 bis 10 zur Lagerung frischen Salats für mindestens 5 Tage und höchstens 10 Tage.

## Revendications

1. Contenant perméable à l'air comprenant un boîtier externe (1), un logement de coulisse (2) ayant une coulisse (3) comportant un bouton de coulisse (4), une plate-forme en surplomb (5), un ou plusieurs contenants de stockage (6), un couvercle de boîtier externe (8) maintenu en place et pouvant s'ouvrir par le biais d'une charnière (7), le couvercle de boîtier externe (8) ayant une poignée (9), où la plate-forme en surplomb (5) comporte un trou (31) recouvert d'un film à base de tissu non tissé perméable aux gaz (30) comprenant un substrat conçu pour permettre une transmission de gaz; et un revêtement sur le substrat de tissu ayant une perméabilité à l'oxygène d'au moins 2,709 cm³/cm²/jour/atm (42 000 cc/100 pouces²/jour/atm) avec une perméabilité maximale à l'oxygène de 61,935 cm³/cm²/jour/atm (960 000 cc/100 pouces²/jour/atm) et ayant une perméabilité au dioxyde de carbone d'au moins 22,581 cm³/cm²/jour/atm (350 000 cc/100pouces²/jour/atm), avec une perméabilité maximale au dioxyde de carbone de 250,896 cm³/cm²/jour/atm (3 888 889 cc/100 pouces²/jour/atm) telles que déterminées à une température de 13,3 °C ; le contenant perméable à l'air définissant une atmosphère créée à l'intérieur de ce dernier pour prolonger la durée de conservation de multiples articles agricoles, **caractérisé en ce que** le film à base de tissu non tissé perméable aux gaz (30) est scellé dans le logement de coulisse (2) recouvrant le trou (31).

2. Contenant perméable à l'air selon la revendication 1, comprenant en outre de multiples petits compartiments configurés pour recevoir de multiples articles agricoles.

3. Contenant perméable à l'air selon la revendication 1 ou 2, lequel contenant perméable à l'air est intégré dans des systèmes de réfrigération conçus pour stocker et/ou distribuer de multiples articles agricoles.

4. Contenant perméable à l'air selon l'une quelconque des revendications 1 à 3, lequel contenant perméable à l'air est intégré dans des tiroirs et/ou des casiers fixés de manière permanente.

5. Contenant perméable à l'air selon l'une quelconque des revendications 1 à 4, dans lequel la coulisse (3) est mobile à l'intérieur du logement de coulisse (2) et dans lequel le film non tissé perméable aux gaz (30) est inséré dans le logement de coulisse (2).

6. Contenant perméable à l'air selon la revendication 5, dans lequel le logement de coulisse (2) comporte des encoches numérotées situées sur le côté du logement de coulisse (2).

7. Contenant perméable à l'air selon la revendication 6, lequel contenant perméable à l'air est intégré dans des comptoirs-vitrines de produits commerciaux issus de l'agriculture réfrigérés où de multiples contenants perméables à l'air peuvent être intégrés dans une seule unité de comptoir-vitrine.

8. Contenant perméable à l'air selon la revendication 6 ou 7, lequel contenant perméable à l'air est intégré dans des comptoirs-vitrines de produits commerciaux issus de l'agriculture où de multiples contenants perméables à l'air peuvent être intégrés dans une seule unité de comptoir-vitrine.

9. Contenant perméable à l'air selon l'une quelconque des revendications 1 à 4, dans lequel la plate-forme en surplomb (5) comprend un mécanisme de cartouche de type non coulissant qui accueille à l'intérieur le film non tissé perméable aux gaz.

10. Contenant perméable à l'air selon la revendication 9, dans lequel la plate-forme en surplomb (5) comprend un mécanisme de cartouche de type verrou tournant qui accueille à l'intérieur le film non tissé perméable aux gaz.

11. Utilisation du contenant perméable à l'air selon l'une quelconque des revendications 1 à 10 pour prolonger la durée de conservation de brocolis, de coriandre, de bananes, de maïs entier, de laitue, de tomates, de grappes de raisins rouges sans pépins, de champignons, de fraises et de fleurs coupées, telles que des roses, des orchidées, des gerberas et des tulipes.

12. Utilisation du contenant perméable à l'air selon l'une quelconque des revendications 1 à 10 pour stocker une banane pendant une durée minimale de 5 jours et jusqu'à une durée maximale de 16 jours.

13. Utilisation du contenant perméable à l'air selon l'une quelconque des revendications 1 à 10 pour stocker une fraise pendant une durée minimale de 7 jours et jusqu'à une durée maximale de 14 jours.

14. Utilisation du contenant perméable à l'air selon l'une quelconque des revendications 1 à 10 pour stocker des herbes pendant une durée minimale de 10 jours et jusqu'à une durée maximale de 32 jours.

15. Utilisation du contenant perméable à l'air selon l'une quelconque des revendications 1 à 10 pour stocker une tomate pendant une durée minimale de 7 jours et jusqu'à une durée maximale de 18 jours.

16. Utilisation du contenant perméable à l'air selon l'une quelconque des revendications 1 à 10 pour stocker de la laitue pendant une durée minimale de 7 jours et jusqu'à une durée maximale de 32 jours.

17. Utilisation du contenant perméable à l'air selon l'une quelconque des revendications 1 à 10 pour stocker des légumes frais coupés ou des fruits frais coupés pendant une durée minimale de 7 jours et jusqu'à une durée maximale de 12 jours.

18. Utilisation du contenant perméable à l'air selon l'une quelconque des revendications 1 à 10 pour stocker de la salade fraîche pendant une durée minimale de 5 jours et jusqu'à une durée maximale de 10 jours.
